# EUROPEAN PATENT APPLICATION

(11) **EP 2 237 200 A1**
(43) Date of publication of application: **06.10.2010**
(21) Application number: 09290246.9
(22) Date of filing: 01.04.2009
(51) Int. Cl.: G06Q 10/00

(54) **Method for filtering the streaming of virtual environment content assets, a related system, network element and a related virtual environment content asset**

(71) Applicant: Alcatel Lucent, 75008 Paris (FR)
(72) Inventor: van Broeck, Sigurd, 2980 Zoersel (BE); van den Broeck, Marc, Sint-Katelijne-Waver (BE); Lou, Zhe, 2000 Antwerp (BE)
(74) Representative: Narmon, Gisèle Marie Thérèse

(57) **Abstract**

The present invention relates to a Method for filtering the streaming of Virtual Environment content assets, a related system, network element and a related Virtual Environment content asset.

The method relates to policy enforcement on Virtual Environment assets, forwarded from a Virtual Environment of a plurality of Virtual Environments to a Virtual Environment client. The at least one Virtual Environment is coupled to a communications network comprising at least one network element where the communications network further couples the at least one Virtual Environment to the Virtual Environment client. The method first comprises the step of forwarding at least one Virtual Environment asset from the at least one Virtual Environment towards the Virtual Environment client. The method additionally comprises the step of determining a policy enforcement action for the at least one Virtual Environment asset based on at least one characteristic of the at least one Virtual Environment asset and at least one policy rule.

## Description

The present invention relates to a method for policy enforcement as described in claim 1 and a related system as described in claim 10.

Virtual Environments, further referred to as VEs, are posing themselves as the future of Internet. Today, several 1 00s of VE already exist, each addressing a certain target group. As such, there are Virtual Environments that are specifically created for educational and training purposes, others focus on travel, social networking or gaming, and still others are targeting certain communities like corporate environments or young children. It is this mix of Virtual Environments and the seamless interoperability between them that represents the 3D Internet of tomorrow. People will be able to go into virtual showrooms, watch the car of their dreams in their favourite colour, enter inside, activate the controls and make a deal with a sales person. They will be able to make a trip, faster then light in outer space, or take personalized courses with hands-on exercises on virtual models. They will have meetings in virtual settings that are not possible in the real world, or perform tasks in their home from remote locations by operating a personal robot. People will also be able to travel freely from one Virtual Environment to the next just like they are surfing the Internet today from one site to the next. In such case, their avatar may teleport from one Virtual Environment to the next. Additionally, people may also be able to take their virtual belonging - their virtual content assets - with them. In such case, content created in one Virtual Environment - or in an online or offline tool - may be used in another Virtual Environment.

While the 3D Internet of tomorrow has a lot of exiting expectations, there are however also negative aspects to consider just like the Internet of today such as spam, nudity, violence, gambling, drug use, or any other kind of inappropriate content for certain users or user groups.

These Virtual Environments will have to deal with the same negative influence as the Internet of today only now the content will present itself in a different package. Such packages can be avatars, 3D models, textures, animations, scripts, sound, or any other type of content commonly used by Virtual Environments. People will be subjected to aggressive, violent, annoying, sexual, intimidating, or other offending content.

Today, most Virtual Environments have specific solutions build into their Virtual Environment platform. As such, e.g. Second Life is using a combination of (1) access rights on object level and (2) categories on land or parcel to refrain certain individuals from accessing certain content. Such solutions are platform specific, do not address interoperability between different platforms and therefore do not support 3^{rd} party policy control management over content spanning several Virtual Environments.

Research has already been undertaken to define methods tailored to screening certain content for a specific environment. Such methods can be used to modify or replace certain objects for certain users. As such, a religious person may be shown a decently dressed person instead of the scarcely dressed one.

These solutions are however dedicated to and incorporated into the single, particular Virtual Environment platform.

System administrators having to deal with all these different Virtual Environments will either have to deal with the specifics of each of these platforms or have to ban access to the complete platform.

Since these solutions are application specific, network administrator cannot enforce their policies on content for VEs, parents cannot ensure that children have safe and age-appropriate experience in todays hundreds of online VEs and tomorrow's millions of independent online VEs.

An object of the present invention is to provide with a policy enforcement method, a related system wherein the policy enforcement is determined centrally for Virtual Environment assets originating from a plurality of Virtual Environments.

According to the invention, this object is achieved by the method described in claim 1, the system as described in claim 10, the related policy enforcement module as described in claim 11 and the Virtual Environment asset according to claim 13.

Indeed due to the fact that for all Virtual Environment assets which are, forwarded from a Virtual Environment of a plurality of Virtual Environments to a Virtual Environments client VEC, a policy enforcement action is determined for this at least one Virtual Environment asset based on at least one characteristic of the at least one Virtual Environment asset and at least one policy rule.

In this way by centrally determining for each Virtual Environment asset independently of the originating Virtual Environment, a dedicated policy enforcement action based on the at least one characteristic of the Virtual Environment asset in combination with the at least one policy rule, can be determined for such a Virtual Environment asset.

Possible policy enforcement actions are the blocking of the Virtual Environment asset, replacing the Virtual Environment asset with an alternate acceptable Virtual Environment asset or the informing the Virtual Environment that the Virtual Environment asset is not compliant with the at least one policy rule or even the prompting of the Virtual Environment client whether or not said Virtual Environment asset is compliant with said at least one policy rule.

Such a characteristic may be a rating associated to the asset, at least one hierarchy level of a branch in a hierarchical organized Virtual Environment or even a type of content of said Virtual Environment asset where the type of content is determined in an analysis of the content of the Virtual Environment asset.

Furthermore the at least one policy rule is a rule that associates a policy enforcement action to a characteristic of said Virtual Environment asset. Such a policy rule includes any characteristic of such a Virtual Environment asset associated with a policy enforcement action where the associated policy enforcement action is executed in case of determination the defined characteristic of the Virtual Environment asset.

Such an asset may be an avatar, a 3D model, a texture, an animation, and even a script.

The defined policy rule indicates an enforcement action for each of the defined characteristics.

Another characterizing embodiment of the present invention is that described in claim 2.

The method further includes the step of effectuating the policy enforcement action on the at least one Virtual Environment asset. The effectuated policy enforcement may be the blocking of the Virtual Environment asset, replacing the Virtual Environment asset with an alternate acceptable Virtual Environment asset or the informing the Virtual Environment that the Virtual Environment asset is not compliant with the at least one policy rule or even the prompting of the Virtual Environment client whether or not said Virtual Environment asset is compliant with said at least one policy rule.

A further characterizing embodiment of the present invention is described in claim 3.

The policy enforcement action is blocking the Virtual Environment asset.

Another further characterizing embodiment of the present invention is described in claim 4.

The policy enforcement action is replacing said Virtual Environment asset with an alternate acceptable Virtual Environment asset.

Another further characterizing embodiment of the present invention is described in claim 5.

The policy enforcement action is informing the Virtual Environment that the forwarded Virtual Environment asset is not compliant with said at least one policy rule.

Another further characterizing embodiment of the present invention is described in claim 6.

The at least one characteristic is at least one rating associated to said Virtual Environment asset.

Another further characterizing embodiment of the present invention is described in claim 7.

The at least one characteristic is the at least one level of a branch in a hierarchical organized Virtual Environment.

Another further characterizing embodiment of the present invention is described in claim 8.

The at least one characteristic is a type of content of said Virtual Environment asset determined in an analysis of the content of the Virtual Environment asset.

Another further characterizing embodiment of the present invention is described in claim 9.

The at least one policy rule is a rule that associates a policy enforcement action to a characteristic of said Virtual Environment asset.

Further characterizing embodiments of the present invention are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

Similarly, it is to be noticed that the implementation is valid for client-server configurations as well as for Peer -2-Peer configurations. Thus, the term 'client' should not be limited to 'only client' but may also take up the functionality of a VE server for one or more clients.

The above and other objects and features of the invention will become more apparent and the invention itself will be best understood by referring to the following description of an embodiment taken in conjunction with the accompanying drawings wherein:

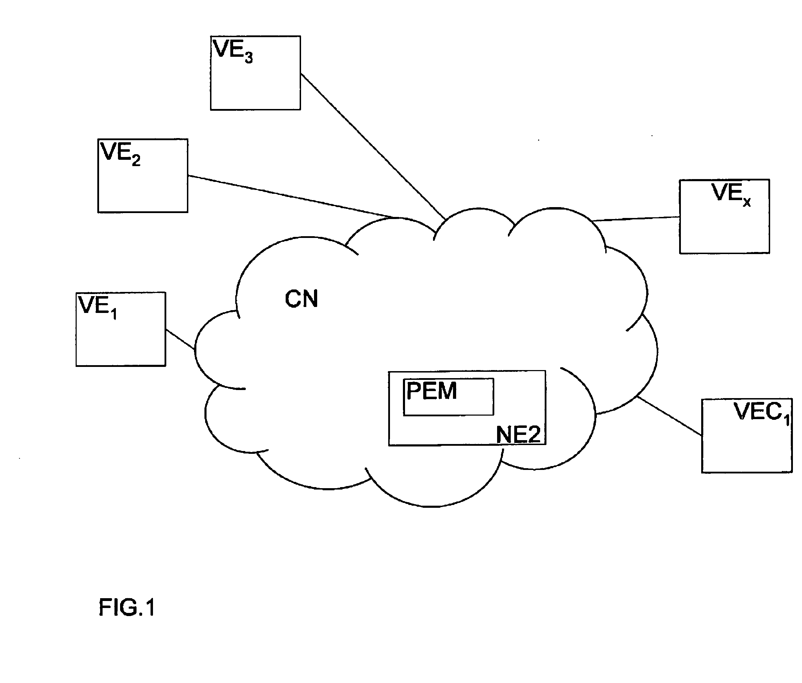

Fig. 1 represents an embodiment of the system of the present invention.

In the following paragraphs referring to the drawings, an implementation of the System for policy enforcement on Virtual Environment assets according to the present invention will be described. In the first paragraph of this description the main elements of the system as presented in FIG. 1 are described. In the second paragraph, all connections between the before mentioned elements and described means are defined. Subsequently all relevant functional means of the policy enforcement module of the System for policy enforcement on Virtual Environment assets as presented in FIG.2 are described followed by a description of all interconnections. In the succeeding paragraph the actual execution of the method for session establishment is described.

Such a system for policy enforcement on Virtual Environment assets comprises at least one Virtual Environment VE1..VEx, for example being an Virtual Environment like Second Life, OSGrid, HyperGrid, Wonderland, Virtual Heroes, Unity, Vizard, WorldForge, OpenCroquet, VastPark, ActiveWorlds, Multiverse, ProtoSphere, or any other of the many open source or commercial Virtual Environment and at least one Virtual Environment client VEC that is able to communicate with such a Virtual Environment. The communication may be the browsing the Virtual Environment like Second Life.

In addition the system comprises a communication network CN, like the internet and e.g. an access network being built-up of at least one network element like core network elements and/or an access network element. Furthermore there is a policy enforcement module PEM for effectuating a policy enforcement action on an Virtual Environment asset assets forwarded from at least one Virtual Environment of a plurality of Virtual Environments to a Virtual Environment client VEC

This policy enforcement module PEM can be incorporated in a network element located in the Virtual Environment client, in the access network, in the Internet or in any other central location where the VE assets must pass to reach the Virtual Environment Client.

The said communications network CN coupling the at least one Virtual Environment VE1, VE2, VE3, VEX to said Virtual Environment client VEC.

The network element NE comprising the policy enforcement module PEM is coupled to the Virtual Environment client where the network element NE has gateway functionality. The at least one network elements are inter-coupled over a core network.

The Policy enforcement Module PEM comprises a policy enforcement action determination part PEDP that is able to determine a policy enforcement action for the at least one Virtual Environment asset based on at least one characteristic of the at least one Virtual Environment asset and at least one policy rule.

Further, the Policy enforcement Module includes a policy enforcement action effectuating part that is adapted to effectuate the policy enforcement action on the at least one Virtual Environment asset assets forwarded from at least one Virtual Environment of a plurality of Virtual Environments to a Virtual Environment client VEC.

In order to explain the operation of the present invention it is assumed that a user at a Virtual Environment client VEC is browsing a certain Virtual Environment VE1 being Second Life, OSGrid, HyperGrid, Wonderland, Virtual Heroes, Unity, Vizard, WorldForge, OpenCroquet, VastPark, ActiveWorlds, Multiverse, ProtoSphere, or any other of the many open source or commercial Virtual Environment.

The Virtual Environment at request of the client VEC forwards assets like an avatar, like a 3-Dimensional model such as a house, a nose or a light, like an animation such as a smile, a waive or a dance, or even like a texture such as a wallpaper, a tattoo or an URL towards the policy enforcement module PEM. The Policy enforcement Module PEM comprises a policy enforcement action determination part PEDP that first determines a policy enforcement action for the asset forwarded by the Virtual Environment VE1, being the animation. The policy enforcement action determination part PEDP first determines at least one characteristic of the Virtual Environment asset (animation). The characteristic of the asset here is assumed to be a rating that is associated to the asset. This rating may be associated by including the rating in the asset or for instance by attaching this rating to the asset. Based on the characteristic, being the rating of the asset, this characteristic and the defined policy enforcement action is looked up in the policy rule that defines a policy enforcement action for each kind of characteristic associated to the asset.

In case of an asset comprising violence or sexual content which is not meant to be shown to minors browsing the Virtual Environment this asset may as such be rated. The policy enforcement action determination part PEDP looks up this rating in a table that hold the policy rules and finds out that the asset is to be blocked. This table, comprising the at least one policy rule, may be maintained within the policy enforcement module but may possibly also be located externally to the policy enforcement module.

Hence, the policy enforcement action effectuating part the blocks the asset. Optionally, or in addition a subsequent asset replacement may be defined in the policy rule, so that a children friendly animation is shown to the user at the Virtual Environment client VEC instead of the violent children unfriendly Virtual Environment asset.

In case the forwarded asset is a child-friendly animation, the rating has an empty or a default value and subsequently the policy enforcement module looks up this rating in the table containing the policy rules, and find out that the policy enforcement action is forwarding the associated asset, and hence the asset can be forwarded to the requesting Virtual Environment client VEC under control of the policy enforcement action effectuating part.

In the alternatively, other possible policy enforcement actions are the informing the Virtual Environment that the Virtual Environment asset is not compliant with the at least one policy rule or e.g. in case of "doubt" prompting the Virtual Environment client whether or not the Virtual Environment asset is compliant with said at least one policy rule.

Instead of a rating being associated to an asset being forwarded from a Virtual Environment towards a Virtual Environment client VEC, the characteristic of the Virtual Environment asset may be the hierarchy level of one or more assets in a branch in a hierarchical organized Virtual Environment.

Most if not all Virtual Environments are organized in a hierarchical way. One such library providing a hierarchical structure is the OpenSceneGraph (OSG) library. Access to the element's hierarchy level as programmed in the OSG could also be used by the policy control. Indeed, once an element is encountered with content type that is rejected by the current policy, all dependent elements can also be refused. The COLLADA format could be extended or the streaming protocol updated to include the current hierarchy level of the element.

In a further embodiment, the VE content assets may be associated with an URL where existing URL rating methods may be applied.

In a further embodiment, the Virtual Environment application is adapted such that the content hierarchy of the streaming content can be read by the Virtual Environment Gateway. The latter is then able to use procedures to block certain content. Indeed, the Virtual Environment Gateway could store a blocking indicator for the uppermost parent in the hierarchy that was blocked and subsequently also block all content from the lower level branches of that parent.

Alternatively the characteristic of the asset may be a type of content of the Virtual Environment asset where the type of content is determined in an analysis of the content of the Virtual Environment asset, for instance by analysis of the animation, the texture or the model itself included in the asset.

In a further embodiment, the Virtual Environment gateway could take also the content hierarchy and sequence into account in an anaylysis of the content to determine the type of content

A further alternative is that the Virtual Environment or part thereof is mentioned on white- or black-list respectively indicating that the Virtual Environment asset accessible on the Virtual Environment or the part thereof is provides with content that can be viewed by a Virtual Environment client or with content that should be blocked.

It is to be noted that such a table containing the at least one policy rule may be updated or modified by a user. In this way user preferences of the user of a Virtual Environment client can be indicated.

Alternatively or in addition to, the table containing the at least one policy rule may be updated or modified by a further party .like a responsible housefather, a school or company network administrator or security officer, or even a government for controlling the policy.

It is further to be noted that intelligent Virtual Environment platforms may also decide to first retrieve the policy rules in place for a certain Virtual Environment client from the Policy enforcement module PEM so that it can already adapt the Virtual Environment in accordance with the policy rules. In such case, the intermediate Policy Enforcement module PEM will continue to operate on the incoming content but will most probably never need to intercept. This third approach also allows each individual Virtual Environment application logic to implement corrective measures that best match their logic. As such, one Virtual Environment may e.g. decide to disallow the user from visiting certain places while another Virtual Environment platform may choose to simply substitute the violating content with an acceptable alternative. In such case, the Virtual Environment may also choose to synchronize other clients that will or have received the violating content with the alternative.

As for current existing solutions, the described policy control can be extended with black and white lists for Virtual Environment platforms as well as for individual elements within the Virtual Environment, user feedback on Virtual Environment platforms and elements, algorithm-based content inspection, statistical information or any other existing means to help identity the type of content. For example, textures may be screened to find nudity, models and animations can be analyzed in search of obscenity, and scripts can be evaluated to discover misbehaviour.

In a further embodiment, the Virtual Environment gateway, being any (access) network element incorporating the policy enforcement module, will keep black lists, white lists or both where he can permanently allow or deny content irrelevant of its category.In a further embodiment, the Virtual Environment gateway will interface with a certain authority that keeps black lists for Virtual Environment content.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for policy enforcement on Virtual Environment assets, forwarded from a Virtual Environment of a plurality of Virtual Environments to a (requesting) Virtual Environment client (VEC) via a communications network comprising at least one network element (NE1, NE2, NEx), said communications network (CN) coupling said at least one Virtual Environment (application) to said Virtual Environment client (VEC), said method comprising the steps of:
a. forwarding at least one Virtual Environment asset from said at least one Virtual Environment towards said Virtual Environment client (VEC); and
b. determining a policy enforcement action for said at least one Virtual Environment asset based on at least one characteristic of said at least one Virtual Environment asset and at least one policy rule.

2. Method according to claim 1, where said method further includes the step of:
c. effectuating said policy enforcement action on said at least one Virtual Environment asset.

3. Method according to claim 1, where said policy enforcement action is blocking said Virtual Environment asset.

4. Method according to claim 1, where said policy enforcement action is blocking is replacing said Virtual Environment asset with an alternate acceptable Virtual Environment asset.

5. Method according to claim 1, where said policy enforcement action is informing said Virtual Environment that said Virtual Environment asset is not compliant with said at least one policy rule.

6. Method according any of claims 1 to 5, where said at least one characteristic is at least one rating associated to said Virtual Environment asset.

7. Method according any of claims 1 to 5, where said at least one characteristic is at least one level of a branch in a hierarchical organized Virtual Environment.

8. Method according any of claims 1 to 5, where said at least one characteristic is a type of content of said Virtual Environment asset determined in an analysis of the content of said Virtual Environment asset.

9. Method according any of claims 1 to 8, wherein said at least one policy rule is rule that associates a policy enforcement action to a characteristic of said Virtual Environment asset.

10. System for policy enforcement on Virtual Environment assets forwarded from at least one Virtual Environment of a plurality of Virtual Environments to a Virtual Environment client (VEC) via a communications network (CN) comprising at least one network element (NE1, NE2, NEx), said communications network (CN) coupling said at least one Virtual Environment to said Virtual Environment client (VEC), said system comprising:
a. a forwarding part (FOP), adapted to stream said at least one Virtual Environment assets from said Virtual Environment towards said Virtual Environment client (VEC); and
b. policy enforcement action determination part (PEDP), adapted to determine a policy enforcement action for said at least one Virtual Environment asset based on at least one characteristic of said at least one Virtual Environment asset and at least one policy rule.

11. Policy enforcement Module for use in method according to any of claims 1 to 9, where said Policy enforcement Module (PEM) comprises a policy enforcement action determination part (PEDP), adapted to determine a policy enforcement action for said at least one Virtual Environment asset based on at least one characteristic of said at least one Virtual Environment asset and at least one policy rule.

12. Policy enforcement Module according to claim 11, where said module further includes a policy enforcement action effectuating part, adapted to effectuate said policy enforcement action on said at least one Virtual Environment asset.

13. Virtual Environment assets for use in method according to any claim 1, wherein said Virtual Environment Content asset is associated with a content rating.
